# EUROPÄISCHE PATENTSCHRIFT

(11) **EP 0 340 286 B1**
(45) Veröffentlichungstag und Bekanntmachung des Hinweises auf die Patenterteilung: **16.06.1993**
(21) Anmeldenummer: 88910032.7
(22) Anmeldetag: 08.11.1988
(51) Int. Cl.: B23B 7/02, B23B 13/02

(54) **DREHAUTOMAT ZUM VERARBEITEN VON WERKSTOFFSTANGEN**
AUTOMATIC LATHE FOR SHAPING BARS OF MATERIAL
TOUR AUTOMATIQUE DE FA ONNAGE DE BARRES DE MATERIAUX

(30) Priorität: 09.11.1987 DE 3738059
(43) Veröffentlichungstag der Anmeldung: 08.11.1989
(73) Patentinhaber: Jauch, Kurt, D-94551 Lalling (DE)
(72) Erfinder: Jauch, Kurt, D-94551 Lalling (DE)
(74) Vertreter: Goetz, Rupert, Dipl.-Ing.
(86) Internationale Anmeldenummer: EP8801011
(87) Internationale Veröffentlichungsnummer: WO8904227

(56) Entgegenhaltungen:
- EP-A- 128 257
- DE-A- 2 515 092
- DE-A- 3 035 451
- FR-A- 2 015 474
- FR-A- 2 118 421
- GB-A- 1 174 981
- US-A- 3 101 019
- US-A- 3 703 112
- US-A- 4 046 036

## Beschreibung

Die Erfindung betrifft einen Drehautomaten zum Verarbeiten von Werkstoffstangen, mit
- einem Spindelstock, an dem ein drehantreibbarer Werkzeugkopf gelagert ist, und in dem Führungsbüchsen zum Führen einer Werkstoffstange angeordnet sind,
- einer hinteren Vorschubvorrichtung zum axialen Vorschieben einer Werkstoffstange durch den Spindelstock und Werkzeugkopf hindurch,
- einer axial hin- und herbewegbaren vorderen Spannvorrichtung mit gesteuerten Spannbacken zum wahlweisen Spannen eines durch den Spindelstock und Werkzeugkopf hindurchgeschobenen unbearbeiteten vorderen Abschnitts oder gedrehten Werkstücks an der Werkstoffstange und zum Ausüben einer vorwärtsgerichteten axialen Zugkraft auf diese, und
- einer Trennvorrichtung zum Abtrennen des vorderen Abschnitts bzw. gedrehten Werkstücks von der Werkstoffstange.

Bei einem bekannten Drehautomaten dieser Gattung (DE 1299482 C3) ist die hintere Vorschubvorrichtung im wesentlichen von einem Schlitten gebildet, der in Längsrichtung des Drehautomaten verschiebbar auf Führungen geführt ist, eine Spannzange zum Spannen einer Werkstoffstange enthält und mit Kurven zusammenwirkt, die auf einer Hauptsteuerwelle des Drehautomaten befestigt sind. Eine dieser Kurven bewirkt axial hin- und hergehende Bewegungen des Schlittens; eine andere Kurve steuert die Spannzange derart, daß sie jeweils bei der Vorwärtsbewegung des Schlittens, zum Spindelstock hin, geschlossen, bei der Rückbewegung des Schlittens hingegen geöffnet ist. An der Rückseite des Spindelstocks ist, der Vorschubvorrichtung zugewandt, eine Werkstoffhaltevorrichtung ortsfest angeordnet, die ebenfalls von einer auf der Hauptsteuerwelle befestigten Kurve derart gesteuert ist, daß sie jeweils während der Vorwärtsbewegung der Vorschubvorrichtung geöffnet ist und für deren Rückbewegung geschlossen wird, um die Werkstoffstange daran zu hindern, sich zusammen mit der Vorschubvorrichtung zurückzubewegen. Vor dem Spindelkopf, also auf dessen von der Vorschubvorrichtung abgewandten Seite, ist, ebenfalls auf einem axial verschiebbaren Schlitten, eine vordere Spannvorrichtung angeordnet, die ein Paar profilierte Spannbacken zum Spannen eines gedrehten vorderen Abschnittes der Werkstoffstange aufweist. Der Schlitten der vorderen Spannvorrichtung ist durch eine Gewindestange einstellbarer Länge mit dem Schlitten der hinteren Vorschubvorrichtung zu gemeinsamer, axial hin- und hergehender Bewegung verbunden. Durch eine weitere Gewindstange ist eine als Trennvorrichtung dienende Kreissäge mit dem Schlitten der hinteren Vorschubvorrichtung verbunden.

Bei diesem bekannten Drehautomaten treten Probleme immer dann auf, wenn eine Werkstoffstange im wesentlichen verbraucht ist, wobei sie im Spindelstock ein Reststück hinterläßt, das ausgestoßen und durch eine neue Werkstoffstange ersetzt werden muß. Falls angestrebt wird, daß sich an das hintere Ende jeder Werkstoffstange, das die hintere Vorschubvorrichtung durchläuft, das vordere Ende einer neuen Werkstoffstange unmittelbar anschließt, ist dazu eine zusätzliche Vorrichtung erforderlich, welche die neue Materialstange solange vorwärtsschiebt, bis diese von der hinteren Vorschubvorrichtung erfaßt wird. Wenn das Reststück einer verbrauchten Werkstoffstange von der nachfolgenden Werkstoffstange nach vorne ausgestoßen wird, können Unfallgefahren entstehen. Deshalb ist es erforderlich, mit dem Nachschieben einer neuen Werkstoffstange solange zu warten, bis die vorangegangene Werkstoffstange verbraucht und ihr Reststück nach hinten aus dem Spindelstock ausgestoßen worden ist.

Aus der DE 3633691 C1 ist eine Trennmaschine bekannt, an welcher Werkstoffstangen von einer Kreissäge, die in einer Trennebene angeordnet ist, in einzelne Abschnitte unterteilt werden, ohne vorher an derselben Maschine in irgendeiner Weise bearbeitet worden zu sein. Baugruppen, die mit einem Spindelstock oder einem umlaufenden Werkzeugkopf eines Drehautomaten vergleichbar wären, sind nicht vorgesehen. Daher stellt sich auch das Problem des Reststückauswurfs aus einem Spindelstock oder drehantreibbaren Werkzeugkopf nicht. Die Kreissäge wird nach jedem Schnitt so weit in radialer Richtung von der Werkstoffstange wegbewegt, daß sie Platz für Backen freimacht, mit denen das jeweils vordere Ende der Werkstoffstange erfaßt wird. Insgesamt weist die bekannte Maschine drei Backenpaare auf, nämlich ein Paar ortsfeste Spannbacken, ein Paar Entsorgungsbacken sowie ein Paar Vorschubbacken. Die Spannbacken sind - bezogen auf die Förderrichtung der Werkstoffstange - förderstromaufwärts von der Trennebene angeordnet. Die Entsorgungsbacken sind förderstromabwärts von der Trennebene angeordnet und in Längsrichtung der Werkstoffstange hin- und herbewegbar, halten jeweils das abzutrennende vordere Materialstück vor und während dem Abtrennen eingespannt und schaffen dieses dann weg. Die Vorschubbacken greifen nach dem Abtrennen des Materialstücks und nach dem Rückzug der Kreissäge durch die Trennebene hindurch und erfassen das nun vordere Ende der Materialstange, um diese in Förderrichtung durch das inzwischen geöffnete ortsfeste Spannbackenpaar hindurchzuziehen, während das abgetrennte Materialstück von den Entsorgungsbacken in Förderrichtung fortgeschafft wird.

Die Verwendung getrennter und in gewissen Grenzen unabhängig voneinander bewegbarer Vorschub- und Entsorgungsbacken kann das Entsorgungsproblem bei einem Drehautomaten der anmeldungsgemäß vorausgesetzten Gattung nicht befriedigend lösen, weil sich Werkzeuge an einem umlaufenden Werkzeugkopf nicht soweit aus ihrer Arbeitsstellung entfernen lassen, daß sich die Gefahr einer Kollision mit Vorschubbacken, die über die Entsorgungsbacken in den Arbeitsbereich der Drehwerkzeuge hineingreifen, mit ausreichender Sicherheit vermeiden ließe.

Der Erfindung liegt die Aufgabe zugrunde, einen Drehautomaten zum Verarbeiten von Werkstoffstangen derart weiterzubilden, daß der Ersatz einer verbrauchten Werkstoffstange durch eine neue auf einfachere Weise, mit geringerem Zeitaufwand und ohne Unfallgefahr möglich ist.

Die Aufgabe ist erfindungsgemäß ausgehend von einem Drehautomaten der eingangs beschriebenen Gattung dadurch gelöst, daß
- die hintere Vorschubvorrichtung zum stetigen Vorschieben einer Werkstoffstange bis zur Spannvorrichtung hin ausgebildet und in eine zum Aufnehmen einer weiteren Werkstoffstange bereite Stellung zurückbewegbar ist, ehe die vorangegangene Werkstoffstange verbraucht ist,
- die vordere Spannvorrichtung mittels eines eigenen Vorschubantriebs unabhängig von der hinteren Vorschubvorrichtung axial hin- und herschiebbar ist und ihre Spannbacken derart steuerbar sind, daß Vorwärtsbewegungen der Werkstoffstange während der Bearbeitung eines Werkstücks allein von der Verschiebung der Spannvorrichtung bewirkt werden,
- dem Vorschubantrieb der vorderen Spannvorrichtung ein eigener inkrementaler Weggeber zugeordnet ist, der an eine zentrale Steuereinheit des Drehautomaten angeschlossen ist,
- am Spindelstock ein Signalgeber angeordnet ist, der ein Signal abgibt, wenn das hintere Ende der in Bearbeitung befindlichen Werkstoffstange sich an ihm vorbeibewegt, und
- die zentrale Steuereinheit so ausgelegt ist, daß von der Abgabe des genannten Signals an die weiteren aus der Werkstoffstange hergestellten Werkstücke gezählt werden und ein vom normalen Bewegungsprogramm des Vorschubantriebs der vorderen Spannvorrichtung abweichendes Programm zum Herausziehen eines Reststücks der Werkstoffstange eingeschaltet wird, sobald die gezählte Werkstückzahl mit einer berechneten Werkstückzahl übereinstimmt.

Dadurch, daß die hintere Vorschubvorrichtung stetig anstatt intervallweise arbeitet, kann jede von ihr vorgeschobene Werkstoffstange den Weg durch den Spindelstock und den drehantreibbaren Werkzeugkopf hindurch bis zur vorderen Spannvorrichtung in einem Zug und in kurzer Zeit zurücklegen. Infolgedessen bedeutet es keinen nennenswerten Zeitverlust, mit dem Vorschieben einer neuen Werkstoffstange zu warten, bis das Reststück der vorangegangenen Werkstoffstange von der vorderen Spannvorrichtung vollständig aus dem Spindelstock und drehantreibbaren Werkzeugkopf herausgezogen und aus dem Arbeitsbereich des Drehautomaten entfernt worden ist. Das Herausziehen des Reststücks geschieht nach einem eigenen Programm, bei dem eine sehr viel höhere Bewegungsgeschwindigkeit erreicht werden kann als beim Bewegen einer ganzen Werkstoffstange. Da das Reststück aus dem Arbeitsbereich des drehantreibbaren Werkzeugkopfes herausgezogen wird, besteht nicht die Gefahr, daß das Reststück vom Werkzeugkopf in unkontrollierter Weise weggeschleudert wird. Ebenso wird der Zeitverlust vermieden, der bei dem bekannten Drehautomaten dann auftritt, wenn das Reststück aus Sicherheitsgründen nach hinten aus dem Spindelstock ausgestoßen und die nächste Werkstoffstange erst danach eingeführt wird.

Vorteilhafte Weiterbildungen der Erfindung sind Gegenstand der Unteransprüche.

Ein Ausführungsbeispiel mit weiteren Einzelheiten der Erfindung wird im folgenden anhand schematischer Zeichnungen beschrieben. Es zeigt:
- Fig. 1: die Draufsicht des mittleren und vorderen Teils eines numerisch gesteuerten Drehautomaten, teilweise in einem waagerechten Schnitt,
- Fig. 2: eine Seitenansicht des mittleren und hinteren Teils des Drehautomaten, teilweise in einem senkrechten Schnitt,

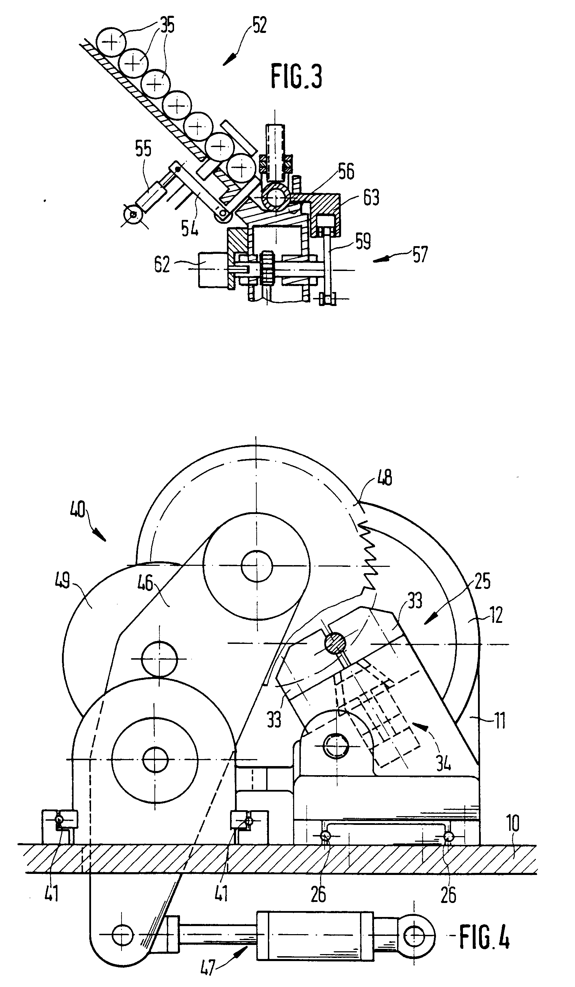

- Fig. 3: den senkrechten Schnitt III-III in Fig. 2,
- Fig. 4: einen vergrößerten Querschnitt in der Ebene IV-IV in Fig. 1, und
- Fig. 5a bis 5f: waagerechte Teilschnitte des Drehautomaten in verschiedenen Arbeitsstellungen.

Der dargestellte Drehautomat hat ein Maschinenbett 10, auf dem ein Spindelstock 11 befestigt ist. Im Spindelstock 11 ist ein Werkzeugkopf 12 um eine waagerechte Achse drehantreibbar gelagert, die im folgenden als X-Achse bezeichnet wird. Der Antrieb für den Werkzeugkopf 12 ist von üblicher Bauart und deshalb nicht dargestellt. Im Werkzeugkopf 12 sind zwei Wellen 13 gelagert, die zur X-Achse parallel und in bezug auf diese einander diametral gegenüber angeordnet sind. An jeder der beiden Wellen 13 ist ein Werkzeughalter 14 befestigt, der ein Drehwerkzeug 15 trägt. Die Drehwerkzeuge 15 sind im dargestellten Beispiel sowohl zum Einstechen wie zum Langdrehen geeignet.

Am vom Werkzeughalter 14 entfernten, inneren Ende jeder der beiden Wellen 13 ist ein Ritzel 16 ausgebildet, das mit einem innenverzahnten Zahnsegment 17 in Eingriff steht. Die Zahnsegmente 17 sind innerhalb des Werkzeugkopfes 12 so angeordnet, daß sie mit diesem umlaufen und über eine Platte 18 mit einer hydraulischen Kolbenzylindereinheit 19 verbunden sind. Diese ist an der Rückseite des Spindelstocks 11 angeordnet und hat die Aufgabe, die Zahnsegmente 17 parallel zur X-Achse gesteuert zu verschieben, um dadurch die Werkzeughalter 14 zu schwenken, so daß die Drehwerkzeuge 15 bogenförmige Zustellbewegungen zur X-Achse sowie entsprechende Rückzugsbewegungen ausführen.

Die Kolbenzylindereinheit 19 ist an ein Mehrwegeventil 20 angeschlossen, dem eine Regelschaltung 21 zugeordnet ist. Diese hat einen ersten Eingang 22, der an einen inkrementalen Weggeber 23 zum Feststellen der Iststellung der Zahnsegmente 17 angeschlossen ist, und einen zweiten Eingang 24, über den Sollwerte von einer nicht dargestellten zentralen Steuereinheit der numerisch gesteuerten Drehmaschine eingegeben werden.

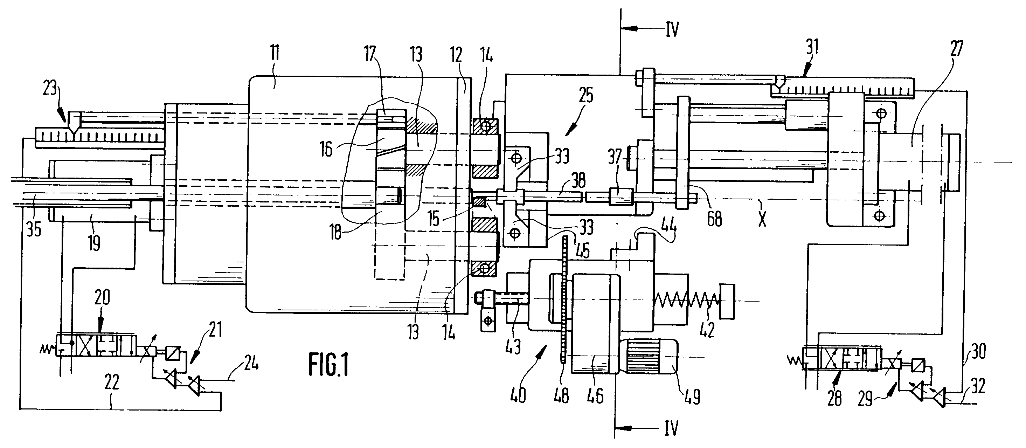

Vor dem Spindelstock 11, in Fig. 1 rechts davon, ist eine vordere Spannvorrichtung 25 auf Führungen 26 geführt, die sich parallel zur X-Achse erstrecken. Zum Verschieben der Spannvorrichtung 25 ist ein eigener Vorschubantrieb 27 in Gestalt einer hydraulischen Kolbenzylindereinheit vorgesehen, die an ein Mehrwegeventil 28 angeschlossen ist. Diesem ist eine Regelschaltung 29 zugeordnet, die mit einem ersten Eingang 30 an einen inkrementalen Weggeber 31 zum Feststellen der Iststellung der Spannvorrichtung 25 angeschlossen ist und mit einem zweiten Eingang 32 Signale für die Sollstellung der Spannvorrichtung 25 von der genannten zentralen Steuereinheit erhält.

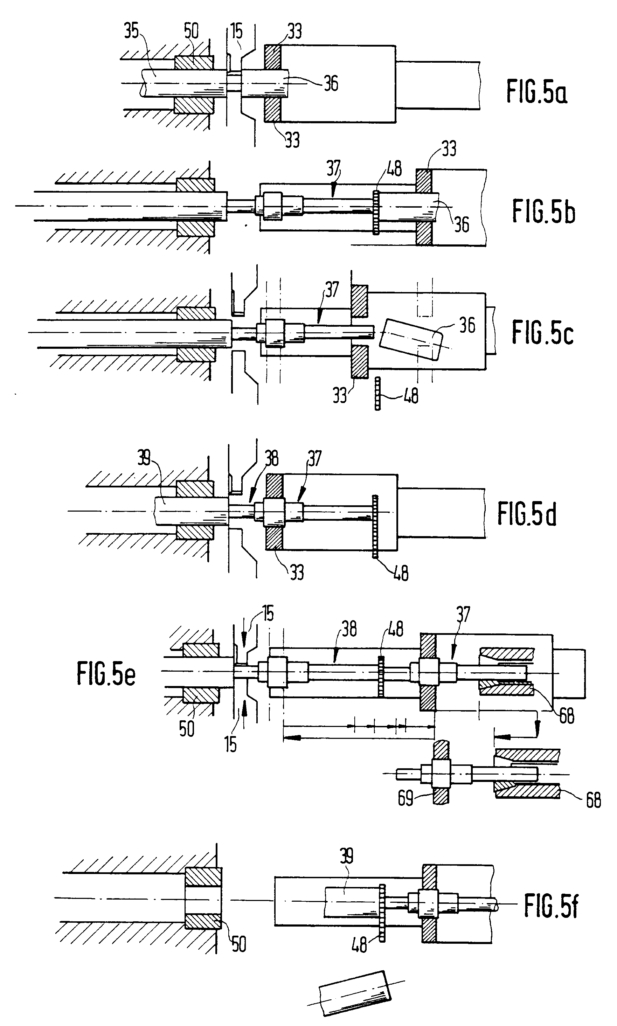

Die Spannvorrichtung 25 hat ein Paar Spannbacken 33, die mittels einer hydraulischen Kolbenzylindereinheit 34 radial zur X-Achse gegenläufig verstellbar sind, um eine Werkstoffstange 35 taktweise zu spannen. Die Spannbacken 33 sind so gestaltet, daß sie je nach Bedarf einen unbearbeiteten vorderen Abschnitt 36 der Werkstoffstange 35 spannen können (Fig. 5a und 5b) oder ein gedrehtes Werkstück 37, während ein nachfolgendes Werkstück 38 in Bearbeitung ist (Fig. 5d und 5e) oder ein Reststück 39 der Werkstoffstange 35 abgetrennt wird (Fig. 5f).

Zusätzlich zur Spannvorrichtung 25 ist vor dem Spindelstock 11 eine Trennvorrichtung 40 angeordnet, die ebenfalls parallel zur X-Achse auf Führungen 41 verschiebbar ist. Die Trennvorrichtung 40 ist durch eine Feder 42 nach hinten, zu einem einstellbaren Anschlag 43 hin, vorgespannt und hat eine Anlagefläche 44, der ein an der Spannvorrichtung 25 ausgebildeter Mitnehmer 45 zugeordnet ist. Infolgedessen kann die Spannvorrichtung 25 bei einer Vorwärtsbewegung, in Fig. 1 nach rechts, die Trennvorrichtung 40 mitnehmen.

Die Spannvorrichtung 25 ist jedoch in bestimmten Grenzen unabhängig von der Trennvorrichtung 40 parallel zur X-Achse verschiebbar, wie vor allem Fig. 5a bis 5f zeigen. In einer hinteren Stellung, die in Fig. 1, 2, 5a und 5d abgebildet ist, steht die Spannvorrichtung 25 in einem sehr geringen Abstand von den Drehwerkzeugen 15 unmittelbar vor dem Werkzeugkopf 12, während die Trennvorrichtung 40 weiter vorne, gemäß Fig. 1, 5a und 5d also weiter rechts, an ihren Anschlag 43 ansteht. Aus dieser Relativstellung heraus ist die Spannvorrichtung 25 nach vorne, also nach rechts, an der Trennvorrichtung 40 vorbei verschiebbar, ohne daß diese ihre Stellung verändert. Erst wenn die Spannvorrichtung 25 über eine bestimmte, durch die Einstellung des Anschlags 43 festgelegte Stellung hinaus nach vorne verschoben wird, nimmt sie gemäß Fig. 5b, 5e und 5f die Trennvorrichtung 40 nach vorne mit.

Zur Trennvorrichtung 40 gehört eine Wippe 46, die mittels einer Kolbenzylindereinheit 47 um eine zur X-Achse parallele Achse schwenkbar ist. An der Wippe 46 ist eine Kreissäge 48 gelagert, die von einem Motor 49 antreibbar ist.

Im Spindelstock 11 ist vorne und hinten je eine Führungsbüchse 50 bzw. 51 ortsfest angeordnet, deren Innendurchmesser möglichst eng an den Außendurchmesser der zu verarbeitenden Werkstoffstangen 35 angepaßt ist. Hinter dem Spindelstock 11 ist ein Stangenmagazin 52 angeordnet, in dem mehrere Werkstoffstangen 35 übereinanderliegend derart gelagert sind, daß ihre vorderen Stirnflächen an einer Anschlagleiste 53 anliegen. Dadurch hat jede Werkstoffstange 35 einen definierten Abstand a von derjenigen Stellung, in der sie erstmals von der Spannvorrichtung 25 gespannt werden soll. Das Stangenmagazin 52 hat ferner eine Sperre 54, die von einer Kolbenzylindereinheit 55 derart betätigbar ist, daß die Werkstoffstangen 35 nacheinander in eine waagerechte Rinne 56 rollen oder rutschen. Die Kolbenzylindereinheit 55 ist ebenfalls von der genannten zentralen Steuereinheit des Drehautomaten gesteuert.

Im hinteren, vom Spindelstock 11 entfernten Endbereich der Rinne 56 ist eine hintere Vorschubvorrichtung 57 angeordnet. Zu dieser gehört im dargestellten Beispiel eine endlose Kette 58, die über ein Antriebsrad 59 und ein Umlenkrad 60 läuft. Das Antriebsrad 59 ist von einem Schrittmotor 61 antreibbar, der vor der erwähnten zentralen Steuereinheit gesteuert und mit einem inkrementalen Weggeber 62 zum Feststellen seiner Iststellung verbunden ist. An der Kette 58 ist ein Schieber 63 befestigt, der längs der Rinne 56, in Richtung der X-Achse verschiebbar ist und einen Stößel 64 enthält, der gegen der Widerstand einer Feder 65 gegenüber dem Schieber 63 nach hinten nachgiebig ist und mit einem Signalgeber 66 zusammenwirkt. Unmittelbar vor der hinteren Führungsbüchse 51 ist ein weiterer Signalgeber 67 angeordnet. Die beiden Signalgeber 66 und 67 sind ebenfalls an die zentrale Steuereinheit angeschlossen.

Der beschriebene Drehautomat arbeitet als Langdrehautomat folgendermaßen:
Zu Arbeitsbeginn gelangt eine Werkstoffstange 35 in die Rinne 56, wobei die Lage ihrer vorderen Stirnfläche durch die Anschlagleiste 53 bestimmt ist, während die Lage ihrer hinteren Stirnfläche unbestimmt ist, da nicht damit gerechnet werden kann, daß sämtliche Werkstoffstangen 35 genau gleichlang sind. Der Motor 61 wird programmgesteuert eingeschaltet, so daß der Schieber 63 sich vorwärtsbewegt und dessen Stößel 64 früher oder später gegen die hintere Stirnfläche der in der Rinne 56 liegenden Werkstoffstange 35 stößt. Bei weiterer Vorwärtsbewegung des Schiebers 63 wird der Stößel 64 im Schieber nach hinten verschoben. Der Widerstand der Feder 65, der dabei überwunden werden muß, ist geringer als der Reibungswiderstand der Werkstoffstange 35 gegen eine Verschiebung nach vorne.

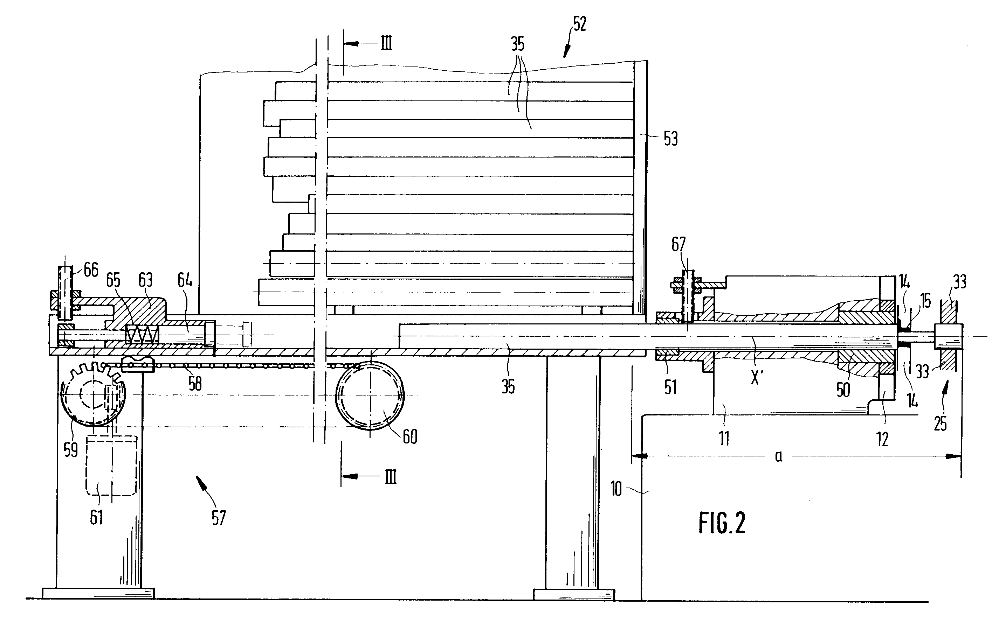

Erst wenn der Stößel 64 einen Anschlag im Schieber 63 erreicht hat, kann dieser die Werkstoffstange 35 vorwärtsschieben. In dem Augenblick, in dem der Stößel 64 seine Anschlagstellung innerhalb des Schiebers 63 erreicht, gibt der Signalgeber 66 ein Signal ab, das die zentrale Steuereinheit dazu veranlaßt, den inkrementalen Weggeber 62 auf Null zu stellen. Nun steht fest, daß der Schieber 63 um die Strecke a weiter vorwärtsbewegt werden muß, damit die Werkstoffstange 35 in diejenige Stellung gelangt, in der ihr vorderer Abschnitt 36 von der vorderen Spannvorrichtung 25 erfaßt werden kann, wenn diese gemäß Fig. 2 und 5a eine vorgegebene hintere Endstellung einnimmt.

Die hintere Vorschubvorrichtung 57 hat mit der beschriebenen, einmaligen Vorwärtsbewegung ihre Einwirkung auf die in der Rinne 56 liegende Werkstoffstange 35 abgeschlossen und kehrt in ihre hintere Endstellung zurück. Jede weitere Vorschubbewegung der betreffenden Werkstoffstange 35 wird ausschließlich dadurch bewirkt, daß die vordere Spannvorrichtung 25 die Werkstoffstange 35 schrittweise vorwärtszieht, wobei während jedes Schrittes eine oder mehrere Einstich- und/oder Langdrehoperationen von den Drehwerkzeugen 15 ausgeführt werden können.

Der vordere Abschnitt 36 jeder einzelnen Werkstoffstange 35 eignet sich im allgemeinen nicht zum Herstellen eines Werkstücks und muß deshalb abgetrennt und ausgestoßen werden. Das Abtrennen des Abschnitts 36 kann beginnen, sobald die Drehwerkzeuge 15 gemäß Fig. 5a einen vorderen Endbereich des ersten eigentlichen Werkstücks 37 bearbeitet haben. Wenn die weitere Bearbeitung des Werkstücks 37 durch Langdrehen stattfindet, also bei mehr oder weniger stetiger Vorwärtsbewegung dieses Werkstücks und der gesamten Werkstoffstange 35, dann wird auch diese Vorwärtsbewegung alleine von einer Verschiebung der Spannvorrichtung 25 bewirkt.

Sobald der vordere Abschnitt 36 der Werkstoffstange 35 bei dieser Vorwärtsbewegung eine bestimmte Strecke zurückgelegt hat, beginnt die Spannvorrichtung 25, die Trennvorrichtung 40 nach vorne mitzunehmen, und diese beginnt mit ihrer Kreissäge 48, den vorderen Abschnitt 36 abzutrennen. Wenn das erste Werkstück 37 fertigbearbeitet und der Abschnitt 37 von ihm getrennt ist, wird die Spannvorrichtung 25 in ihre Ausgangsstellung zurückbewegt, wobei der Abschnitt 36 von ersten fertigen Werkstück 37 aus der Spannvorrichtung 25 ausgestoßen wird.

Auch während des Langdrehens jedes weiteren Werkstücks 38 nimmt die Trennvorrichtung 40 an der Vorwärtsbewegung der Spannvorrichtung 25 teil und beginnt mit dem Abtrennen des zuvor gedrehten, noch in der Spannvorrichtung 25 gespannten Werkstücks 38. Dabei muß nur darauf geachtet werden, daß die Verbindung zwischen den Werkstücken 37 und 38 während des Langdrehens des Werkstücks 38 eine Querschnittsfläche behält, die ausreicht, damit die Spannvorrichtung 25 die zum Langdrehen erforderlichen Zugkräfte in X-Richtung über das Werkstück 37 auf das Werkstück 38 übertragen kann. Entsprechendes gilt bei Arbeitsbeginn für die Verbindung zwischen dem vorderen Abschnitt 36 der Werkstoffstange 35 und dem ersten Werkstück 37, das gedreht wird.

Sobald das hintere Ende der in Bearbeitung befindlichen Werkstoffstange 35 durch die hintere Führungsbüchse 51 hindurchbewegt worden ist, gibt der Signalgeber 67 ein Signal ab, das der zentralen Steuereinheit anzeigt, daß aus der betreffenden Werkstoffstange 35 nur noch eine bestimmte Anzahl Werkstücke vorgegebener Länge hergestellt werden können. Von nun an werden die hergestellten Werkstücke gezählt, beispielsweise anhand der Bewegungszyklen der Spannvorrichtung 25. Sobald die gezählte Anzahl Werkstücke mit der berechneten Anzahl übereinstimmt, setzt die zentrale Steuereinheit automatisch ein besonderes Programm ein, das dafür sorgt, daß die Spannvorrichtung 25 sich um eine größere Strecke als bisher bei jeder Werkstückbearbeitung vorwärtsbewegt und dabei das Reststück 39 aus der vorderen Führungsbüchse 50 herauszieht. Schon während dieser Bewegung beginnt die Trennvorrichtung 40, das Reststück 39 abzusägen, so daß dieses herunterfällt, sobald oder kurz nachdem die Spannvorrichtung 25, wie in Fig. 5f dargestellt, eine vordere Endstellung erreicht hat.

Für den Abtransport der fertiggedrehten Werkstücke 37 ist gemäß Fig. 1 und 5e ein Greifer 68 vorgesehen, der in Richtung der X-Achse hin- und herbewegbar sowie in einer dazu querliegenden Ebene schwenkbar ist und mit einer zusätzlichen Spannvorrichtung 69 zusammenwirkt. Diese Spannvorrichtung 69 nimmt die von der Spannvorrichtung 25 freigegebenen Werkstücke 37 auf, damit sie von nicht dargestellten Vorrichtungen üblicher Art weiterbearbeitet werden können.

## Patentansprüche

1. Drehautomat zum Verarbeiten von Werkstoffstangen, mit
- einem Spindelstock (11), an dem ein drehantreibbarer Werkzeugkopf (12) gelagert ist, und in dem Führungsbüchsen (50, 51) zum Führen einer Werkstoffstange (35) angeordnet sind,
- einer hinteren Vorschubvorrichtung (57) zum axialen Vorschieben der Werkstoffstange (35) durch den Spindelstock (11) und Werkzeugkopf (12) hindurch,
- einer axial hin- und herbewegbaren vorderen Spannvorrichtung (25) mit gesteuerten Spannbacken (33) zum wahlweisen Spannen eines durch den Spindelstock (11) und Werkzeugkopf (12) hindurchgeschobenen unbearbeiteten vorderen Abschnitts (36) oder gedrehten Werkstücks (37) an der Werkstoffstange (35) und zum Ausüben einer vorwärtsgerichteten axialen Zugkraft auf diese, und
- einer Trennvorrichtung (40) zum Abtrennen des vorderen Abschnitts (36) bzw. gedrehten Werkstücks (37) von der Werkstoffstange (35),
dadurch **gekennzeichnet,** daß
- die hintere Vorschubvorrichtung (57) zum stetigen Vorschieben einer Werkstoffstange (35) bis zur vorderen Spannvorrichtung (25) hin ausgebildet und in eine zum Aufnehmen einer weiteren Werkstoffstange (35) bereite Stellung zurückbewegbar ist, ehe die vorangegangene Werkstoffstange (35) verbraucht ist,
- die vordere Spannvorrichtung (25) mittels eines eigenen Vorschubantriebs (27) unabhängig von der hinteren Vorschubvorrichtung (57) axial hin- und herschiebbar ist und ihre Spannbacken (33) derart steuerbar sind, daß Vorwärtsbewegungen der Werkstoffstange (35) während der Bearbeitung eines Werkstücks (37, 38) allein von der Verschiebung der Spannvorrichtung (25) bewirkt werden,
- dem Vorschubantrieb (27) der vorderen Spannvorrichtung (25) ein eigener inkrementaler Weggeber (31) zugeordnet ist, der an eine zentrale Steuereinheit des Drehautomaten angeschlossen ist,
- am Spindelstock (11) ein Signalgeber (67) angeordnet ist, der ein Signal abgibt, wenn das hintere Ende der in Bearbeitung befindlichen Werkstoffstange (35) sich an ihm vorbeibewegt, und
- die zentrale Steuereinheit so ausgelegt ist, daß von der Abgabe des genannten Signals an die weiteren aus der Werkstoffstange (35) hergestellten Werkstücke (37) gezählt werden und ein vom normalen Bewegungsprogramm des Vorschubantriebs (27) der vorderen Spannvorrichtung (25) abweichenden Programm zum Herausziehen eines Reststücks (39) der Werkstoffstange (35) eingeschaltet wird, sobald die gezählte Werkstückzahl mit einer berechneten Werkstückzahl übereinstimmt.

2. Drehautomat nach Anspruch 1,
dadurch **gekennzeichnet,** daß die hintere Vorschubvorrichtung (57) derart gesteuert ist, daß sie in ihre zum Aufnehmen einer weiteren Werkstoffstange (35) bereite Stellung zurückkehrt, sobald die vorangegangene Werkstoffstange (35) erstmals von der vorderen Spannvorrichtung (25) erfaßt worden ist.

3. Drehautomat nach Anspruch 1 oder 2,
dadurch **gekennzeichnet,** daß
- auch der hinteren Vorschubvorrichtung (57) ein an die zentrale Steuereinheit angeschlossener inkrementaler Weggeber (62) zugeordnet ist,
- die hintere Vorschubvorrichtung (57) eine Rinne (56) aufweist, in die jeweils eine Werkstoffstange (35) aus einem Stangenmagazin (52) einlegbar ist, und
- längs der Rinne (56) ein Schieber (63) bewegbar ist, dem ein Signalgeber (66) zugeordnet ist, der beim Anstoßen des Schiebers (63) an das hintere Ende einer Werkstoffstange (35) ein Signal abgibt, aufgrund dessen die Länge des von der hinteren Vorschubvorrichtung (57) zu bewirkenden Vorschubs berechenbar ist.

4. Drehautomat nach einem der Ansprüche 1 bis 3,
dadurch **gekennzeichnet,** daß
- die Trennvorrichtung (40) in Richtung zu einem einstellbaren hinteren Anschlag (43) vorgespannt ist, und
- die vordere Spannvorrichtung (25) einen Mitnehmer (45) aufweist, durch den die Trennvorrichtung (40) nach vorne mitnehmbar ist.

5. Drehautomat nach einem der Ansprüche 1 bis 4,
dadurch **gekennzeichnet,** daß die vordere Spannvorrichtung (25) hin- und herbewegbar ist zwischen einer dem Werkzeugkopf (12) unmittelbar vorgelagerten hinteren Stellung (Fig. 5a und 5d) zum Erfassen eines unbearbeiteten Abschnittes (36) der Werkstoffstange (35) oder eines noch mit der Werkstoffstange (35) zusammenhängenden gedrehten Werkstücks (37), und einer der Trennvorrichtung (40) vorgelagerten vorderen Stellung (Fig. 5b und 5e) zum Freigeben des unbearbeiteten Abschnitts (36) bzw. des gedrehten Werkstücks (37) nach dessen Abtrennung von der Werkstoffstange (35).

## Claims

1. Automatic lathe for processing bar stock, including
a headstock (11) having a rotatable tool head (12) supported thereon and in which guiding bushes (50, 51) are mounted for guiding a bar (35),
a rearward feeding device (57) for axially advancing the bar (35) through the headstock (11) and the tool head (12),
an axially reciprocating forward clamping device (25) having controlled clamping jaws (33) for selectively clamping on the bar (35) an unmachined leading portion (36) or a turned workpiece (37) having been pushed through the headstock (11) and the tool head (12) and for applying thereto a forwardly directed axial traction force, and
a cutting-off device (40) for cutting off the leading portion (36) and the turned workpiece (37) respectively from the bar (35),
**characterized** in that
the rearward feeding device (57) is arranged for continuously advancing a bar (35) up to the forward clamping device (25) and is capable of being returned to a position ready for receiving another bar (35) before the preceding bar (35) is consumed,
the forward clamping device (25) is axially alternately movable by means of a separate feed unit (27) independently from the rearward feeding device (57), and that its clamping jaws (33) are controllable in such a manner that forward movements of the bar (35) during the processing of a workpiece (37, 38) is effected alone by the displacement of the clamping device (25),
the feed unit (27) of the forward clamping device (25) has associated therewith a separate incremental displacement transducer (31) which is connected to a central control unit of the automatic lathe,
a signal transmitter (67) is arranged on the headstock (11), said transmitter delivering a signal when the trailing end of the bar (35) in process is passing thereby, and
the central control unit is so arranged that from the delivery of said signal on any other workpieces (37) made from the bar (35) are counted, and in that a programme is switched on which is different from the normal motion programme of the feed unit (27), for withdrawing the residual portion (39) of the bar (35) as soon as the counted number of workpieces coincides with a calculated number of workpieces.

2. Automatic lathe according to claim 1,
**characterized** in that the rearward feed unit (57) is controlled in such a manner that it will return to the position ready for receiving another bar (35) as soon as the preceding bar (35) has been grasped for the first time by the forward clamping device (25).

3. Automatic lathe according to claim 1 or 2,
**characterized** in that
an incremental displacement transducer (62) is associated also with the rearward feed unit (57) and is connected with the central control unit,
the rearward feed unit (57) includes a channel (56) into which one bar (35) each from a bar stock carrier (52) is capable of being placed, and
in that a slide (63) is movable along the channel (56), having associated to it a signal transmitter (66) which delivers a signal when the slide (63) abuts against the trailing end of a (35), in dependence on which signal the length of the advance to be effected by the rearward feed unit (57) is capable of being calculated.

4. Automatic lathe according to any of claims 1 to 3,
**characterized** in that
a cutting off device (40) is urged in the direction of an adjustable rear stop (43), and
the forward clamping device (25) is provided with a driving element (45) through which the cutting off device (40) is capable of being driven in the forward direction.

5. Automatic lathe according to any of claims 1 to 4,
**characterized** in that the forward clamping device (25 is alternately movable between a rearward position directly in front of the tool head (12) (Figs. 5a and 5d) for grasping an unmachined portion (36) of the bar (35) or a turned workpiece (37) still attached to the bar (35), and a forward position in front of the cutting off device (40) (Figs. 5b and 5e) for releasing the unmachined portion (36) or the turned workpiece (37) after it has been cut off from the bar (35).

## Revendications

1. Tour automatique à travailler des barres de matériau, comprenant
- une poupée (11) sur laquelle est supportée une tête porte-outils (12), apte à être entraînée en rotation, et dans laquelle des douilles de guidage (50, 51) sont disposées qui sont destinées à guider une barre de matériau (35),
- un dispositif d'avance arrière (57) destiné à pousser en avant axialement la barre de matériau (35) à travers la poupée (11) et la tête porte-outils (12),
- un dispositif de serrage avant (25) apte à être déplacé axialement en va-et-vient, comprenant des mâchoires de serrage (33) asservies destinées à serrer sélectivement, sur la barre de matériau (35), d'une partie avant non usinée (36) ou d'une pièce tournée (37), poussée à travers la poupée (11) et la tête porte-outils (12), et à exercer sur elles une force de tension axiale dirigée vers l'avant, et
- un dispositif de tronçonnage (40) destiné à séparer respectivement la partie avant (36) ou la pièce tournée (37) de la barre de matériau (35),
ledit tour **caractérisé** en ce que
- le dispositif d'avance arrière (57) est disposé à effectuer un avancement continu d'une barre de matériau (35) jusqu'au dispositif de serrage avant (25) et est capable d'être retourné dans une position dans laquelle il est prêt à recevoir une autre barre de matériau (35) avant que la barre de matériau précédente (35) ne soit consommée,
- le dispositif de serrage avant (25) est capable d'être déplacé axialement en va-et-vient, indépendamment du dispositif d'avance arrière (57), grâce à un dispositif d'avance (27) séparé, et ses mâchoires de serrage (33) sont capables d'être commandées de telle manière que des déplacements de la barre de matériau en avant durant l'usinage d'une pièce (37, 38) sont causés seulement par le déplacement du dispositif de serrage (25),
- un capteur de déplacement incrémentiel (31) séparé est associé au dispositif d'avance (27) du dispositif de serrage avant (25), ledit capteur étant relié à une unité de commande centrale du tour automatique,
- un transmetteur de signaux (67) est disposé sur la poupée (11), ledit transmetteur émettant un signal au moment où passe devant lui le bout arrière de la barre de matériau (35) en train d'être usinée, et
- en ce que l'unité de commande centrale est arrangée de telle sorte que, dès l'émission du signal mentionné, les autres pièces (37) réalisées dans la barre de matériau (37) sont comptées et en ce qu'il est mis en service un programme différent du programme de mouvement normal du dispositif d'avance (27) du dispositif de serrage avant (25) pour l'extraction d'une queue (39) de la barre de matériau (35) aussitôt que le nombre de pièces compté est conforme à un nombre de pièces calculé.

2. Tour automatique selon la revendication 1,
**caractérisé** en ce que le dispositif d'avance arrière (57) est commandé de telle manière qu'elle retourne dans sa position où il est prêt à recevoir une autre barre de matériau (35) dès que la barre de matériau (35) précédente aura été saisie pour la première fois par le dispositif de serrage avant (25).

3. Tour automatique selon la revendication 1 ou 2,
**caractérisé** en ce que
- le dispositif d'avance arrière (57) est également muni d'un capteur de déplacement incrémentiel (62), relié à l'unité de commande centrale,
- le dispositif d'avance arrière (57) comporte une goulotte (56) dans laquelle peut être posée chaque fois une barre de matériau (35) prise dans un dispositif d'alimentation de barres (52), et
- en ce qu'un coulisseau (63) est déplaçable le long de la goulotte (56) auquel est associé un transmetteur de signaux (66) qui, au moment du tamponnement du coulisseau (63) contre le bout arrière d'une barre de matériau (35), émet un signal en fonction duquel la longueur de l'avance à effectuer par le dispositif d'avance arrière (57) peut être calculée.

4. Tour automatique selon l'une quelconque des revendications 1 à 3,
**caractérisé** en ce que
- le dispositif de tronçonnage (40) est sollicité vers une butée arrière réglable (43), et
- le dispositif de serrage avant (25) comporte un entraîneur (45) au moyen duquel le dispositif de tronçonnage (40) est capable d'être entraîné vers l'avant.

5. Tour automatique selon l'une quelconque des revendications 1 à 4,
**caractérisé** en ce que le dispositif de serrage avant (25) est déplaçable en va-et-vient entre une position arrière directement en face de la tête porte-outils (12) (Fig. 5a et 5d) afin de saisir une portion non encore usinée (36) de la barre de matériau (35) ou une pièce tournée (37) encore attachée à la barre de matériau (35), et une position avant en face du dispositif de tronçonnage (40) (Fig. 5b et 5e), pour lâcher respectivement la portion non usinée (36) ou la pièce tournée (37) après sa séparation de la barre de matériau (35).
